# DEMANDE DE BREVET EUROPEEN

(11) **EP 1 739 950 A1**
(43) Date de publication de la demande: **03.01.2007**
(21) Numéro de dépôt: 06291072.4
(22) Date de dépôt: 29.06.2006
(51) Int. Cl.: H04N 1/00, G06Q 30/00

(54) **Système et procédé d'impression de photographie, borne et terminal**

(30) Priorité: 29.06.2005 FR 0506650
(71) Demandeur: Sagem Communication, 95801 Cergy-St Christophe (FR)
(72) Inventeur: Sabatier, Pierre, 95800 Cergy (FR)
(74) Mandataire: Debay, Yves

(57) **Abrégé**

L'invention concerne un système et un procédé d'impression de photographie par une borne (3) communiquant avec un serveur (1) et au moins avec un terminal (2) communiquant pour permettre d'identifier l'utilisateur afin de lui facturer le nombre exact de photographies imprimées obtenues du système d'impression.

Le système d'impression de photographie comporte :
- une interface de communication à courte distance pour charger une série de photographies associée à un identifiant d'utilisateur ;
- des moyens de mémorisation d'informations numériques constitutives des images de la série de photographie ;
- des moyens de sélection par une interface homme/machine pour choisir au moins une image et sélectionner des paramètres représentatifs de l'identifiant de l'image choisie, du format associé à chaque image, du nombre de reproduction pour chaque image ;
- des moyens de mémorisation des paramètres sélectionnés ;
- des moyens d'impression reliés à des moyens de traitement ; et
- des moyens de gestion et communication agencés, d'une part pour présenter un devis à partir des paramètres sélectionnés, et d'autre part pour valider une impression à réaliser par les moyens d'impression sur la base des paramètres sélectionnés, uniquement en cas de réception par les moyens de gestion et communication d'une information représentative d'une acceptation du devis.

## Description

### DOMAINE TECHNIQUE DE L'INVENTION

La présente invention se rapporte au domaine des systèmes d'impression de photographie. L'invention concerne plus particulièrement un système et un procédé d'impression de photographie par une borne communiquant avec un serveur et au moins avec un terminal communiquant pour permettre d'identifier l'utilisateur afin de lui facturer le nombre exact de photographies imprimées qu'il obtient du système d'impression.

Dans ce qui suit, on entendra par terminal communiquant tout équipement émetteur récepteur portatif, portable, susceptible de fonctionner sur un réseau de communication, par exemple de radiotéléphonie mobile tel que GSM, GPRS, UMTS et tout type de réseau analogue, par exemple WLAN.

### ARRIERE-PLAN TECHNOLOGIQUE DE L'INVENTION

Il est déjà connu des systèmes d'impression permettant d'imprimer des photographies à partir d'un téléphone mobile ou autre appareil du même style. Mais ces systèmes ne permettent pas la facturation directe auprès de son opérateur téléphonique et nécessitent donc l'utilisation d'autres types de paiement comme les cartes de crédits, les chèques ou encore l'argent en espèce.

Plus généralement, les diverses solutions exploitées pour résoudre le problème des transactions courantes par exemple relatives à la consommation d'un service ou d'un bien sont souvent génériques et nécessitent un règlement du service ou du bien par des moyens de paiement conventionnels.

Les solutions actuelles envisagées pour n'importe quel type de transaction présentent de nombreux inconvénients car les transactions par carte bancaire nécessitent des formalités de signature ou encore de saisir des données de code pour permettre de faire fonctionner un terminal lecteur de carte, ce qui représente dans les deux cas une perte de temps. En outre, les lecteurs de cartes à puce ne peuvent être généralement utilisés que pour un minimum de facturation.

Il existe aussi des systèmes permettant de commander, directement auprès de son opérateur téléphonique, l'impression des photographies numériques. Mais ce système ne permet pas d'avoir accès à une interface permettant de modifier ou retoucher si nécessaire ses photographies. De plus un certain laps de temps s'écoule entre le moment où l'on commande les photographies et le moment où on les reçoit avec la facture.

Ces différents systèmes ne permettent pas de fournir sans délai des impressions de photographies tout en assurant une sécurisation des transactions et une facturation, qui peut se faire directement auprès de l'opérateur et calculée en fonction d'un nombre exact de photographies imprimées.

Il existe donc un besoin de fournir un système d'impression efficace, rapide et facile d'accès pour l'utilisateur, en offrant une solution permettant d'accélérer les transactions et plus généralement les échanges de données sécurisées.

Il est connu dans l'art antérieur, par le document EP 1 178 445, une méthode pour réaliser des transactions par une interface de communication à courte distance à l'aide d'un terminal radio sans fil hybride. Le terminal radio peut d'une part, communiquer à l'aide d'une interface de communication à courte distance avec un terminal de service comprenant une interface sans fil analogue. Cette interface de communication à courte distance est par exemple de type radio Bluetooth ou Home RF ou bien de type optique à infrarouge. D'autre part, le terminal radio du porteur est doté d'une antenne radio et peut communiquer une information d'identification IMSI (International Mobile Subscriber Identity) ou TMSI (Temporary Mobile Subscriber Identity) lui permettant de s'authentifier auprès d'un réseau de radiocommunication.

Selon la méthode du document EP 1 178 445, le terminal hybride du porteur peut transmettre au terminal de service, via l'interface de communication à courte distance, un message incluant ladite identification. Pour réaliser l'authentification du porteur, le terminal de service transfère ensuite l'information d'identification reçue vers une base de données d'authentification qui peut être l'équipement HLR (Home Location Register) dudit réseau de radiocommunication contenant les profils et les localisations grossières d'abonnés du réseau. La transaction s'effectue si l'authentification du porteur a été réussie.

Toutefois, ce type de méthode ne permet pas le transfert de données volumineuses telles que des photos et n'est pas adaptée pour fournir un service d'impression sans délai.

Il est également connu, par le document US 2005/099652, un système d'impression de photographie correspondant au préambule de la revendication 1. Le mode de facturation associé à ce système s'opère par l'établissement connexion avec un serveur de facturation pendant une durée déterminée. Un inconvénient de ce type de solution est que l'utilisateur n'est pas préalablement informé du coût à prévoir pour l'impression.

### DESCRIPTION GENERALE DE L'INVENTION

La présente invention a donc pour objet de supprimer un ou plusieurs des inconvénients de l'art antérieur en définissant un système d'impression de photographie, comportant une interface de communication à courte distance pour charger une série de photographies associée à un identifiant d'utilisateur, des moyens de mémorisation d'informations numériques constitutives des images de la série de photographie, et des moyens d'impression reliés à des moyens de traitement, caractérisé en ce qu'il comprend :
- des moyens de sélection par une interface homme/machine pour choisir au moins une image et sélectionner des paramètres représentatifs de l'identifiant de l'image choisie, du format associé à chaque image, du nombre de reproduction pour chaque image ;
- des moyens de mémorisation des paramètres sélectionnés ;
- une interface de communication supplémentaire, distincte de l'interface de communication à courte distance et de l'interface homme/machine, permettant la réception par les moyens de traitement de messages d'autorisation pour déclencher les moyens d'impression ; et
- des moyens de gestion et communication délocalisés par rapport au reste du système d'impression de photographie, agencés, d'une part pour présenter un devis avant impression à partir des paramètres sélectionnés, et d'autre part pour émettre un message d'autorisation permettant de valider une impression à réaliser par les moyens d'impression sur la base des paramètres sélectionnés, uniquement en cas de réception par les moyens de gestion et de communication d'une information représentative d'une acceptation du devis.

Ainsi, l'invention permet d'effectuer une facturation après acceptation d'un devis et vérification que l'édition du nombre de photographie correspond bien à la quantité demandée, ou de procéder à la rectification de la facturation.

Selon une autre particularité de l'invention, le système d'impression comprend une borne de service incluant une interface de communication à courte distance, les moyens de sélection, les moyens de mémorisation de la série de photographies, les moyens d'impression et des moyens d'émission d'une information indiquant les quantités de photographies réellement imprimées, l'interface homme machine comportant un affichage, un dispositif interactif tel qu'un clavier, reliés audits moyens de traitement.

Selon une autre particularité de l'invention, la borne de service comporte des moyens de communication avec un serveur distant de facturation pour transmettre audit serveur une information indiquant les quantités de photographies réellement imprimées avec un identifiant de l'utilisateur, le serveur comportant un dispositif d'édition de factures et d'envoi sous forme de message numérique de la facture éditée à un terminal communiquant identifié à l'aide de l'identifiant de l'utilisateur.

Selon une autre particularité de l'invention, le serveur comporte un système générateur de SMS pour envoyer la facture éditée.

Selon une autre particularité de l'invention, les moyens de gestion et de communication sont constitués d'un serveur apte à communiquer avec un terminal communiquant correspondant à l'identifiant reçu, la borne de service comportant :
- des moyens de génération d'un message numérique constitutif d'un bon de commande comportant des informations concernant le format de photographie, le nombre de photographie, l'identifiant d'utilisateur ;
- des moyens de communication pour émettre ledit message numérique à destination du serveur par une communication filaire ou non.

Selon une autre particularité de l'invention, le serveur comporte des moyens de génération d'un devis et d'envoi d'un SMS contenant le devis à destination du N° d'identifiant de l'utilisateur par une communication par voie hertzienne.

Selon une autre particularité de l'invention, le terminal communiquant comporte des moyens d'afficher le message numérique formant le devis et de l'accepter par une action sur des moyens interactifs (clavier, joystick), des moyens de traitement générant un message d'acceptation du devis à destination du serveur et des moyens d'envoi du message d'acceptation.

Selon une autre particularité de l'invention, le terminal communiquant est soit en liaison filaire, soit en liaison radioélectrique de moyenne portée (WIFI, « Bluetooth ») ou optique, avec la borne de service.

Selon une autre particularité de l'invention, la borne comprend un moyen d'acceptation du devis et de validation de l'impression par action sur un élément interactif de la borne, et des moyens de communication avec le serveur opérateur pour recevoir le devis et émettre le message d'acceptation ; et un moyen d'établir une communication avec un dispositif de mémorisation du type carte SIM ou Mémoire Flash.

Selon une autre particularité de l'invention, les informations de l'identifiant sont incorporées dans les informations numériques constitutives de la photographie, sous forme de filigrane (watermarking).

Selon une autre particularité de l'invention, les informations d'identifiant constituent un en-tête d'un fichier JPG contenant les informations numériques constituant la photographie et les paramètres concernant le format et le nombre de reproductions.

Selon une autre particularité de l'invention, l'identifiant ainsi que les paramètres sont transmis dans un fichier spécifique indépendant des fichiers constitutifs des informations numériques représentatives des photographies.

Ainsi de manière avantageuse, l'invention utilise un opérateur d'un réseau de radiotéléphonie permettant d'authentifier le terminal communiquant envoyant la requête et ainsi de facturer immédiatement sur le compte correspondant le nombre de photographies imprimées retirées de la borne par l'utilisateur.

Un autre but de l'invention est de proposer une borne de service d'impression de photographies permettant le chargement, l'édition de photographies et le déclenchement d'une facturation vers l'utilisateur.

A cet effet, l'invention propose une borne de service d'impression de photographies, comprenant des moyens de sélection par une interface homme/machine pour choisir au moins une image et sélectionner des paramètres représentatifs de l'identifiant de l'image choisie, du format associé à chaque image et du nombre de reproduction pour chaque image, des moyens de mémorisation d'informations numériques représentatives d'images d'au moins une série de photographie, des moyens de mémorisation des paramètres sélectionnés et des moyens d'impression reliés à des moyens de traitement, caractérisée en ce qu'elle comprend :
- une interface de communication à courte distance pour charger une série de photographies associée à un identifiant d'utilisateur, en provenance d'un terminal mobile d'utilisateur ;
- des moyens de communication avec au moins un serveur distant pour:
   - émettre une information indiquant les quantités de photographies réellement imprimées ainsi que l'identifiant de l'utilisateur ;
   - recevoir une information de validation d'impression ; et
   - émettre une acceptation de facturation en réponse à un signal d'achèvement d'impression par les moyens d'impression d'une série de photographies ;

Les moyens de traitement sont agencés pour déclencher une impression sur la base des paramètres sélectionnés uniquement après réception de l'information de validation.

Un autre but de l'invention est de proposer un terminal communiquant qui permet la sélection de photographies, le choix de paramètres d'édition des photographies, la réception et la validation d'un devis par l'utilisateur.

Ce but est atteint par le fait que le terminal communiquant comporte:
- une interface de communication à courte distance, des moyens de sélection d'au moins une photographie d'une série de photographies mémorisées par le terminal communiquant;
- des moyens de génération d'un message numérique constitutif d'un bon de commande comportant au moins des informations numériques constitutives de l'image de la photographie et des informations concernant le format de photographie, le nombre de photographie, l'identifiant d'utilisateur ;
- des moyens de communication pour émettre ledit message numérique à destination d'une borne de service d'impression de photographies par une communication sans fil courte distance (par exemple wifi, bluetooth, infra rouge)
- des moyens de réception et d'émission par un réseau de radio téléphonie, des moyens d'afficher le message numérique arrivant par le réseau de radio téléphonie et formant le devis, des moyens de l'accepter par une action sur des moyens interactifs (clavier, joystick), des moyens de traitement générant un message d'acceptation du devis à destination du serveur relié au réseau de radiotéléphonie et des moyens d'envoi du message d'acceptation.

Un autre but de l'invention est de proposer un procédé mis en oeuvre entre un terminal, une borne d'impression et un serveur permettant de s'assurer des choix de l'utilisateur et de la facturation des photographies réellement imprimées.

A cet effet, l'invention concerne un procédé d'impression de photographie par une borne coopérant avec un terminal communiquant et un serveur pouvant communiquer avec la borne et le terminal, caractérisé en ce qu'il comporte :
- une étape de mémorisation d'informations numériques constitutives des images de la série de photographie ;
- une étape de sélection par une interface homme/machine du terminal ou de la borne pour choisir au moins une image et sélectionner des paramètres représentatifs de l'identifiant de l'image choisie, du format associé à chaque image, du nombre de reproduction pour chaque image ;
- une étape de communication à courte distance entre la borne et le terminal pour charger au moins une série de photographies associée à un identifiant d'utilisateur ;
- une étape de mémorisation des paramètres sélectionnés et d'association des paramètres à l'identifiant pour générer et envoyer un message à un serveur ;
- une étape d'envoi d'un devis pour présenter par l'affichage le devis à l'utilisateur désigné par l'identifiant.
- une étape d'envoi d'un message d'acceptation du devis au serveur qui valide l'impression à réaliser par les moyens d'impression de la borne sur la base des paramètres sélectionnés, uniquement en cas de réception par le serveur d'une information représentative d'une acceptation du devis ; et
   une étape, en fin d'impression des photographies par la borne, d'envoi d'un message au serveur pour indiquer le nombre et le format des photographies réellement imprimées pour servir à la facturation.

L'invention, avec ses caractéristiques et avantages, ressortira plus clairement à la lecture de la description faite en référence aux dessins annexés donnés à titre d'exemples non limitatifs dans lesquels :
- la figure 1 est une vue d'ensemble schématique du dispositif selon l'invention;
- la figure 2 est une vue schématique de la borne photographie du dispositif selon l'invention;
- la figure 3 est une vue schématique du terminal communiquant du dispositif selon l'invention;

### DESCRIPTION DES MODES DE REALISATION PREFERES DE L'INVENTION

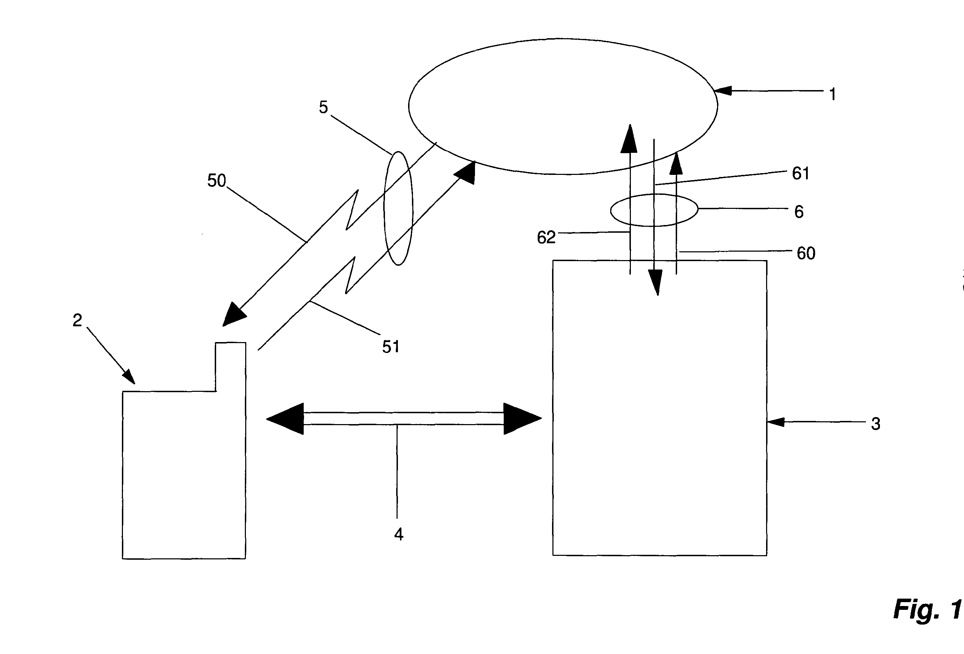

L'invention va à présent être décrite en référence aux figures 1 à 3.

La figure 1 illustre l'ensemble du système d'impression comprenant un terminal (2) communiquant qui peut être un radiotéléphone, un PDA ou tout autre équipement pourvu d'un dispositif de communication radio (Wifi, Bluetooth) ou optique courte distance et d'un dispositif de communication avec un réseau de téléphonie (GSM, CDMA, GPRS, etc...) ou de services multimédia (TNT) ou internet. Le terminal (2) peut être également un appareil photographique pourvu des fonctions de communication et de liaison (4) avec une borne de service dédiée à l'impression de photographies, ci-après appelée borne photographie (3) et d'autre part avec un serveur.

Ce terminal (2) comporte d'une part des possibilités de liaison avec un serveur (1) d'un opérateur, par exemple téléphonique, par liaison (5) radiotéléphonique ou Internet, et d'autre part des moyens de communication par une liaison filaire (4) ou WIFI, ou Bluetooth ou optique avec la borne photographie (3). La borne (3) est elle même en relation avec le serveur (1) de l'opérateur téléphonique par des liaisons (6) radiotéléphoniques ou internet.

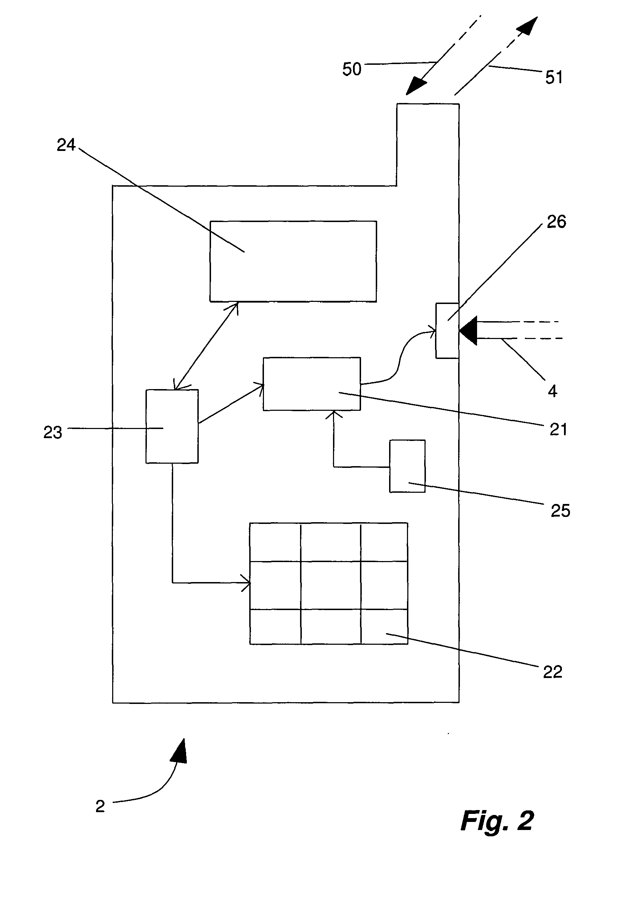

Comme illustré sur la figure 2, le terminal (2) comporte un dispositif d'affichage (24) permettant l'affichage des messages reçus et notamment la présentation d'un devis par une fonction de traitement des messages reçus. L'affichage permet également le déroulement d'un menu de sélection permettant la sélection des photographies et des formats désirés, ce menu étant géré par un système de traitement (21) et le programme associé (25).

Dans une variante de réalisation, le choix des photographies et des formats désirés se fait par l'intermédiaire d'une interface homme/machine (23) du terminal qui permet, par action sur les touches du clavier ou sur une touche type joystick ou bille ou flèche à un logiciel de traitement des actions effectuées, de déplacer un indicateur (par exemple une surbrillance) dans le menu et d'effectuer des sélections des images photographiques que l'utilisateur souhaite imprimer ainsi que les paramètres correspondants(format de la photo, impression en mat ou en brillant, nombre d'exemplaires de la photo au format défini.

Les photographies sont stockées dans une carte mémoire (22) électronique du type SIM ou Flash Memory.

La liaison avec la borne photographie (3) se fait par une interface de liaison (26) du terminal (2) capable au moins d'émettre à courte distance avec une borne (3) pour transmettre les messages numériques contenant le résultat des sélections effectuée par l'utilisateur sur le terminal.

La liaison (50) représente l'envoi du devis par le serveur de l'opérateur téléphonique par l'intermédiaire d'un SMS et la liaison (51) représente l'envoi du SMS contenant les informations précisant l'accord ou le désaccord du client avec le devis.

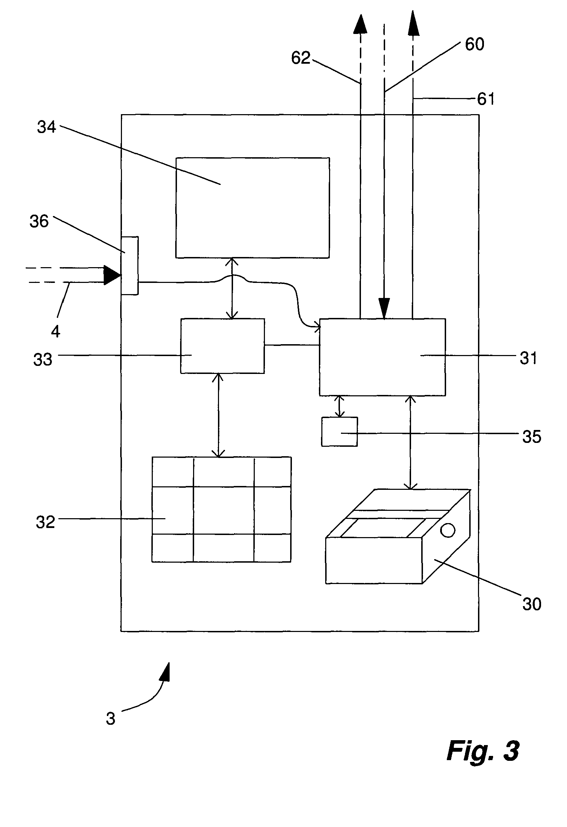

La figure 3 illustre la borne (3) photographie. Cette borne (3) comprend une interface de liaison (36) permettant la liaison avec le terminal (2) communiquant. Cette interface de liaison présente un programme analysant les informations provenant du terminal et qui peuvent être soit des fichiers ou messages numériques d'images associées à un identifiant du terminal ou de l'utilisateur, soit des fichiers ou messages contenant en plus des informations précédentes, celles concernant le format, la qualité d'impression choisie et le nombre d'exemplaire. Dans le cas où le terminal ne comporte pas les fonctionnalités permettant de choisir le format, la qualité d'impression et le nombre d'exemplaire et où les messages reçus du terminal ne contiennent pas ces informations, alors un programme (35) de la borne est exécuté pour permettre de choisir, par exemple par un menu affiché par les moyens d'affichage (34) de la borne (3), le nombre d'exemplaires d'une photographie, son format et la qualité d'impression. Ce programme (35) est exécuté par le système de traitement (31) de la borne (3) (par exemple un microprocesseur).

La borne comporte un moyen (32) interactif qui permet le déplacement dans le menu du programme (35) de traitement des informations provenant de l'interface (36).

Le dernier élément constituant la borne photographie est une imprimante (30) qui va permettre l'impression des photographies sous le contrôle du microprocesseur du système de traitement (31) de la borne (3) après que celui-ci ait reçu l'autorisation d'impression du serveur. Cet accord du serveur est émis par le serveur à destination de la borne (3) après avoir reçu de l'utilisateur son acceptation du devis transmis par le serveur à l'utilisateur. La borne comporte également dans le système de traitement (31) des moyens d'émission et de réception de messages numériques à destination ou provenant du serveur (1).

La liaison (60) représente l'utilisation de ces moyens d'émission pour émettre un message de commande indiquant le nombre de photographie, les formats, la qualité d'impression, l'identité de l'utilisateur etc..

La liaison (61) représente l'utilisation des moyens de réception de la borne pour recevoir le message contenant l'information d'autorisation de la part du serveur d'éditer les photographies après acceptation par l'utilisateur du devis. Le signal (62) correspond à l'envoi d'un message contenant des informations précisant le nombre de photographies réellement éditées et les paramètres associés à chaque impression pour permettre la facturation définitive par le serveur.

Dans une variante de réalisation, la borne photographie peut comporter en plus des moyens ci dessus les moyens de réception et d'émission de messages SMS pour permettre la communication du devis et de présentation du devis sur la borne à la place du terminal communiquant si ce dernier ne comporte pas les fonctionnalités ou l'abonnement nécessaires. Dans ce cas la fonctionnalité de la borne sera activée par l'utilisateur, et la borne (3) photographie utilisera les moyens ci dessus pour recevoir le devis à la place du terminal en précisant comme destinataire du devis la borne et non pas le numéro de téléphone du terminal.

La borne (3) comporte un élément interactif, par exemple de type bouton, soit un bouton physique sur la borne, soit un bouton logique sur l'écran, pour valider et accepter le devis et déclencher l'impression.

Dans une autre variante, la borne a en plus des moyens ci-dessus, comme moyen de communication, un moyen (32) qui permet le chargement des informations numériques constituant les images des photographies, directement avec l'interface (36) sans avoir forcément à dialoguer avec un terminal du type communiquant mais simplement avec une carte de type électronique du type SIM ou Flash Memory. Dans ce cas l'interface (36) est un bornier de communication avec la carte SIM ou la Mémoire Flash memory.

Selon la première variante de réalisation du système, le terminal (2) communiquant contient donc les photographies que l'utilisateur va vouloir imprimer. L'utilisateur choisit les photographies à imprimer à partir du dispositif d'affichage en association avec l'interface homme/machine géré par le système de traitement (21) et le programme associé (25) du terminal. Il choisit en même temps de transmettre sous forme de filigranes incorporés dans les informations constitutives de la photographie, ou bien avec une en-tête sous forme de fichier JPG contenant les informations numériques constituant la photo, ou encore dans un fichier spécifique indépendant des fichiers constitutifs des informations numériques, les paramètres (identifiant de l'utilisateur, qualité, format, nombre).

Les photographies sélectionnées sont envoyées a la borne (3) photographie par les interfaces (26, 36) de liaison du terminal (2) communiquant et de la borne (3) photographie. La borne (3) photographie va stocker les informations numériques concernant les photographies sur des moyens de stockage (32) et va vérifier si ces informations contiennent un identifiant. L'identifiant est ensuite envoyé par la borne (3) photographie au serveur avec les informations concernant le format la qualité et le nombre de chaque photographies Après acceptation du devis transmis par le serveur au terminal de l'utilisateur, le serveur autorise l'impression des photographies.

Grâce au dispositif d'affichage (34) de la borne (3) photographie l'utilisateur peut sélectionner le nombre de photographie à imprimer, leur format et si nécessaire effectuer des retouches. La borne (3) photographie envoi (60) ces informations au serveur de l'opérateur téléphonique. Le serveur (1), grâce à des moyens de génération d'un devis, calcule le devis correspondant et l'envoie sous la forme d'un SMS (50) au terminal (20) communiquant correspondant à l'identifiant reçu, envoyé par la borne (3). L'utilisateur va alors accepter ou non ce devis, et en cas d'acceptation renvoie un SMS (51) au serveur (1) pour signifier son accord à l'opérateur téléphonique.

Le serveur (1) transmet un message (61) signifiant l'accord de l'utilisateur à la borne et l'autorisation du serveur à la borne pour permettre l'impression des photographies. Si le serveur (1) ne trouve pas l'identifiant dans les identifiants mémorisés dans sa base de donnée des abonnés au service ou si l'utilisateur n'accepte pas le devis, la borne (3) ne recevra pas le message (61) du serveur et l'opération d'impression ne pourra pas être effectuée .Le programme de la borne (3) est conçu pour pouvoir déclencher l'impression qu'après avoir reçu le feu vert du serveur. Si ce feu vert tarde à venir le programme annoncera après une temporisation l'annulation de l'impression et demandera à l'utilisateur s'il veut refaire une tentative.

Dans une autre variante le devis et l'accord de l'utilisateur se font via la borne (3) photographie par l'intermédiaire du dispositif d'affichage et de l'interface homme machine. C'est alors la borne (3) qui transmet l'accord de l'utilisateur au serveur (1).

La borne (3) grâce à un logiciel interne va lancer l'impression des photographies. La borne (3) renvoie à la fin de l'impression un message (62) au serveur pour lui indiquer le nombre de photographies réellement imprimées pour permettre au serveur (1) de l'opérateur téléphonique d'ajuster la facture. En effet diverses raisons comme un problème de papier ou un mauvais fonctionnement de l'imprimante peuvent modifier le nombre de photographies imprimées par rapport à celui initialement choisi par l'utilisateur.

L'opérateur téléphonique peut ainsi facturer sont client sur le nombre réel de photographies imprimées. Il peut aussi éventuellement envoyer un dernier SMS à son client l'informant du montant final de la facture.

Dans une variante, les informations de l'identifiant sont incorporées dans les informations numériques constitutives de la photographie, sous forme de filigrane (watermarking).

Dans une autre variante, les information d'identifiant constituent une en-tête d'un fichier JPG contenant les informations numériques constituant la photographie et les paramètres concernant le format et le nombre de reproductions.

Dans une dernière variante, l'identifiant est transmis dans un fichier spécifique indépendant des fichiers constitutifs des informations numériques représentatives des photographies.

Ainsi la borne (3) coopère avec un terminal (2) communiquant et un serveur (1) pouvant communiquer avec la borne et le terminal, pour mettre en oeuvre un procédé qui comporte :
- une étape de mémorisation d'informations numériques constitutives des images de la série de photographie ;
- une étape de sélection par une interface homme/machine (23, 33) du terminal (2) ou de la borne (3) pour choisir au moins une image et sélectionner des paramètres représentatifs de l'identifiant de l'image choisie, du format associé à chaque image, du nombre de reproduction pour chaque image ;
- une étape de communication à courte distance entre la borne et le terminal pour charger au moins une série de photographies associée à un identifiant d'utilisateur ;
- une étape de mémorisation des paramètres sélectionnés et d'association des paramètres à l'identifiant pour générer et envoyer un message à un serveur (1) ;
- une étape d'envoi d'un devis pour présenter par l'affichage le devis à l'utilisateur désigné par l'identifiant.
- une étape d'envoi d'un message d'acceptation du devis au serveur qui valide l'impression à réaliser par les moyens d'impression de la borne sur la base des paramètres sélectionnés, uniquement en cas de réception par le serveur d'une information représentative d'une acceptation du devis ; et
- une étape, en fin d'impression des photographies par la borne (3), d'envoi d'un message au serveur (1) pour indiquer le nombre et le format des photographies réellement imprimées pour servir à la facturation.

Il doit être évident pour l'homme du métier que la présente invention permet des modes de réalisation sous de nombreuses autres formes spécifiques sans l'éloigner du domaine d'application de l'invention comme revendiquée. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus

## Revendications

1. Système d'impression de photographie, comportant une interface de communication (36) à courte distance pour charger une série de photographies associée à un identifiant d'utilisateur, des moyens de mémorisation (32) d'informations numériques constitutives des images de la série de photographie, et des moyens d'impression (30) reliés à des moyens de traitement (31), **caractérisé en ce qu'**il comprend :
- des moyens de sélection par une interface homme/machine (33) pour choisir au moins une image et sélectionner des paramètres représentatifs de l'identifiant de l'image choisie, du format associé à chaque image, du nombre de reproduction pour chaque image ;
- des moyens de mémorisation des paramètres sélectionnés ;
- une interface de communication supplémentaire, distincte de l'interface de communication (36) à courte distance et de l'interface homme/machine (33), permettant la réception par les moyens de traitement (31) de messages (61) d'autorisation pour déclencher les moyens d'impression (30) ; et
- des moyens de gestion et communication délocalisés par rapport au reste du système d'impression de photographie, agencés, d'une part pour présenter un devis avant impression à partir des paramètres sélectionnés, et d'autre part pour émettre un message d'autorisation (61) permettant de valider une impression à réaliser par les moyens d'impression (30) sur la base des paramètres sélectionnés, uniquement en cas de réception par les moyens de gestion et communication d'une information représentative d'une acceptation du devis.

2. Système d'impression de photographie selon la revendication 1, **caractérisé en ce qu'**il comprend une borne (3) de service incluant l'interface (36) de communication à courte distance, les moyens de sélection, les moyens de mémorisation (32) de la série de photographies, les moyens d'impression (30) et des moyens d'émission d'une information indiquant les quantités de photographies réellement imprimées, l'interface homme machine (33) comportant un affichage (34), un dispositif interactif tel qu'un clavier, reliés audits moyens de traitement (31).

3. Système d'impression de photographie selon la revendication 2, **caractérisé en ce que** la borne (3) de service comporte des moyens de communication avec un serveur (1) distant de facturation pour transmettre audit serveur (1) une information (62) indiquant les quantités de photographies réellement imprimées avec un identifiant de l'utilisateur, le serveur (1) comportant un dispositif d'édition de factures et d'envoi (50) de la facture éditée à un terminal communiquant (2) identifié à l'aide de l'identifiant de l'utilisateur.

4. Système d'impression de photographie selon la revendication 3, **caractérisé en ce que** le serveur (1) comporte un système générateur de SMS pour envoyer (50) la facture éditée.

5. Système d'impression de photographie selon une des revendications 2 à 4, **caractérisé en ce que** les moyens de gestion et communication sont constitués d'un serveur (1) apte à communiquer avec un terminal (2) communiquant correspondant à l'identifiant reçu, la borne (3) de service comportant :
- des moyens de génération d'un message constitutif d'un bon de commande comportant des informations concernant le format de photographie, le nombre de photographie, l'identifiant d'utilisateur ;
- des moyens de communication pour émettre ledit message à destination du serveur (1) par une communication filaire ou non.

6. Système d'impression de photographie selon une des revendications 3 à 5, **caractérisé en ce que** le serveur (1) comporte des moyens de génération d'un devis et d'envoi (50) d'un SMS contenant le devis à destination du N° d'identifiant de l'utilisateur par une communication par voie hertzienne.

7. Système d'impression de photographie selon une des revendications 3 à 6, **caractérisé en ce que** le terminal (2) communiquant comporte des moyens (23, 24) d'afficher le message numérique formant le devis et de l'accepter par une action sur des moyens interactifs (clavier, joystick), des moyens de traitement (21) du terminal générant un message d'acceptation du devis à destination du serveur (1) et des moyens d'envoi du message d'acceptation (51).

8. Système d'impression de photographie selon une des revendications 3 à 7, **caractérisé en ce que** le terminal (2) communiquant est soit en liaison filaire, soit en liaison radioélectrique de moyenne portée (WIFI, Bluetooth) ou optique, avec la borne de service (3).

9. Système d'impression de photographie selon une des revendications 3 à 8, **caractérisé en ce que** la borne (3) comprend un moyen d'acceptation du devis et de validation de l'impression par action sur un élément interactif de la borne, et des moyens de communication avec le serveur (1) pour recevoir le devis et émettre le message d'acceptation ; et un moyen d'établir une communication avec un dispositif de mémorisation du type carte SIM ou Mémoire Flash.

10. Système d'impression de photographie selon une des revendications 1 à 9, **caractérisé en ce que** les informations de l'identifiant sont incorporées dans les informations numériques constitutives de la photographie, sous forme de filigrane (watermarking).

11. Système d'impression de photographie selon une des revendications 1 à 9, **caractérisé en ce que** les information d'identifiant constituent une en-tête d'un fichier JPG contenant les informations numériques constituant la photographie et les paramètres concernant le format et le nombre de reproductions.

12. Système d'impression de photographie selon une des revendications 1 à 9, **caractérisé en ce que** l'identifiant est transmis dans un fichier spécifique indépendant des fichiers constitutifs des informations numériques représentatives des photographies.

13. Borne (3) de service d'impression de photographies, comprenant des moyens de mémorisation (32) d'informations numériques représentatives d'images d'au moins une série de photographie, des moyens de mémorisation de paramètres sélectionnés en liaison avec chaque image et des moyens d'impression (30) reliés à des moyens de traitement (31), **caractérisée en ce qu'**elle comprend :
- une interface de communication (36) à courte distance pour charger une série de photographies et de paramètres associés à un identifiant d'utilisateur, en provenance d'un terminal (2) mobile d'utilisateur ;
- des moyens de communication avec au moins un serveur (1) distant pour :
• recevoir (61) une information de validation d'impression issue du serveur (1) distant ;
• émettre (62) une information indiquant les quantités de photographies réellement imprimées ainsi que l'identifiant de l'utilisateur ; et
• émettre une acceptation de facturation en réponse à un signal d'achèvement d'impression par les moyens d'impression (30) d'une série de photographies ;
- les moyens de traitement (31) étant agencés pour déclencher une impression sur la base des paramètres sélectionnés uniquement après réception, via lesdits moyens de communication, de l'information de validation.

14. Borne (3) de service d'impression de photographies selon la revendication 13, comprenant des moyens de sélection par une interface homme/machine (33) pour choisir au moins une image et sélectionner des paramètres représentatifs de l'identifiant de l'image choisie, du format associé à chaque image et du nombre de reproduction pour chaque image.

15. Terminal communiquant coopérant avec une borne (3) selon la revendication 13, le terminal (2) comportant une interface de communication à courte distance (26), des moyens de sélection d'au moins une photographie d'une série de photographies mémorisées par le terminal communiquant, **caractérisé en ce qu'**il comporte;
- des moyens de génération d'un message numérique constitutif d'un bon de commande comportant au moins des informations numériques constitutives de l'image de la photographie et des informations concernant le format de photographie, le nombre de photographie, l'identifiant d'utilisateur ;
- des moyens de communication pour émettre ledit message numérique à destination d'une borne (3) de service d'impression de photographies par une communication sans fil courte distance ;
- des moyens de réception et d'émission par un réseau de radiotéléphonie, des moyens (24) d'afficher un message numérique arrivant par le réseau de radiotéléphonie et formant un devis avant impression, des moyens (23) de l'accepter par une action sur des moyens interactifs, des moyens de traitement (21) du terminal générant un message d'acceptation du devis à destination du serveur (1) relié au réseau de radiotéléphonie et des moyens d'envoi du message d'acceptation.

16. Procédé d'impression de photographie par une borne (3) coopérant avec un terminal communiquant (2) et un serveur (1) pouvant communiquer avec la borne (3) et le terminal (2), le procédé comprenant - une étape de mémorisation d'informations numériques constitutives des images d'une série de photographie, **caractérisé en ce qu'**il comporte :
- une étape de sélection par une interface homme/machine (23, 33) du terminal (2) ou de la borne (3) pour choisir au moins une image et sélectionner des paramètres représentatifs de l'identifiant de l'image choisie, du format associé à chaque image, du nombre de reproduction pour chaque image ;
- une étape de communication à courte distance entre la borne (3) et le terminal (2) pour charger au moins une série de photographies associée à un identifiant d'utilisateur ;
- une étape de mémorisation des paramètres sélectionnés et d'association des paramètres à l'identifiant pour générer et envoyer un message à un serveur (1) ;
- une étape d'envoi par le serveur (1) d'un devis pour présenter par l'affichage le devis à l'utilisateur désigné par l'identifiant.
- une étape d'envoi d'un message d'acceptation du devis au serveur (1) qui valide l'impression à réaliser par les moyens d'impression (30) de la borne (3) sur la base des paramètres sélectionnés, uniquement en cas de réception par le serveur (1) d'une information représentative d'une acceptation du devis ; et
- une étape, en fin d'impression des photographies par la borne (3), d'envoi d'un message au serveur (1) pour indiquer le nombre et le format des photographies réellement imprimées pour servir à la facturation.
